# EUROPEAN PATENT APPLICATION

(11) **EP 2 133 246 A1**
(43) Date of publication of application: **16.12.2009**
(21) Application number: 08158053.2
(22) Date of filing: 11.06.2008
(51) Int. Cl.: B60R 21/34, B62D 25/08

(54) **Cross member and vehicle**

(71) Applicant: Ford Global Technologies, LLC, Dearborn, MI 48126 (US)
(72) Inventor: Olsson, Lennart, 44334 Lerum (SE); Hallnéus, Gunnar, 41671 Göteborg (SE); Erlingfors, Mats, 44465 Jörlanda (SE); Fredriksson, Anders, 41467 Göteborg (SE)
(74) Representative: Valea AB

(57) **Abstract**

Cross member (20) for a vehicle (10), which cross member (20) is arranged to extend substantially in the transverse (Y) direction of said vehicle (10) when mounted on a vehicle chassis (16) of said vehicle (10), and on which cross member (20) a first (26) of two mating mechanical parts, which are arranged to engage to fasten and/or lock a bonnet (12) of said vehicle (10), is arranged to be mounted in a designated position (P). An area in the vicinity of said designated position (P) comprises at least one mechanically weakened deformable portion (30) that is arranged to be more readily deformable than the majority of the remainder of said cross member (20) in the event of a collision with a pedestrian, said cross member (20) when said cross member (20) is mounted on said vehicle chassis (16) and subjected to an impact or compression force in the event of a collision with a pedestrian, whereby the deformation of said cross member (20) in the vicinity of said designated position (P) is facilitated and whereby said first mechanical part (26) is consequently arranged to be controllably displaced from its designated position (P) in the event of said collision.

## Description

### TECHNICAL FIELD

The present invention concerns a cross member for a vehicle, and a vehicle comprising such a cross member.

### BACKGROUND OF THE INVENTION

During a collision between a vehicle and a pedestrian, the pedestrian initially impacts the front of the vehicle and thereafter the bonnet (or hood) of the vehicle. Although a vehicle bonnet may be designed to be relatively deformable, the engine covered by the bonnet is normally not deformable and this means that the deformation capability will be dependent on the size of the clearance between the bonnet and the engine.

In some countries regulations have come into effect in recent years that place a limit on the severity of pedestrian head injury when struck by a vehicle. This is leading to more advanced bonnet designs, such as the bonnet being arranged to push its surface several centimetres away from hard motor components, using mechanical (spring force) or pyrotechnic devices, in the event of a collision with a pedestrian.

For example, US patent no. 5 385 212 discloses a vehicle bonnet for motor cars where the vehicle bonnet is lifted to provide a clearance, so that the bonnet may deform to cushion the impact. Such a clearance can be obtained by arranging the bonnet assembly to move rearwardly and pivot when an impact is applied to the leading edge of the bonnet. Such a bonnet is however not able to effectively protect a pedestrian in all kinds of impact situations. In particular, in a collision between a child and a vehicle, the head of the child may hit the bonnet at a position much closer to the leading edge of the bonnet.

A solution to the latter problem is disclosed in European patent application publication no. EP 1 842 746, which concerns a bonnet for a vehicle. The bonnet comprises a bonnet portion having a leading end and a trailing end, and a lock striker for locking the free end of the bonnet portion to a vehicle body during normal operation when the bonnet is closed. The lock striker is arranged spaced apart from the bonnet portion by means of at least one elongated arm extending between the inside of the bonnet portion and the lock striker. At least one portion of the elongated arm constitutes a weakening of the elongated arm. The weakening portion is arranged to permit relative pivoting of the bonnet portion and the lock striker about a geometrical axis when the elongated arm is loaded in excess of a predetermined value so as to allow the bonnet portion to move downwardly in case of an impact between a pedestrian and the bonnet portion.

A bonnet is however usually fastened or locked to a rigid cross member of a vehicle chassis by means of a concealed latch comprising two mating mechanical parts, a first of which is mounted on the cross member of the vehicle chassis and the second of which is mounted on the bonnet. The bonnet latch is usually made out of a material having a high tensile strength, such as metal, so that it can withstand the forces that occur during the use of the latch. The bonnet latch therefore constitutes a hard component that may play a role in the event of a collision with a pedestrian.

### SUMMARY OF THE INVENTION

An object of the present invention is to provide a pedestrian-friendly cross member on which part of a bonnet latch of a vehicle may be mounted, whereby the risk of injuries to a pedestrian is reduced in the event of a collision between the vehicle and a pedestrian.

This object is achieved by a cross member for a vehicle or vehicle platform/chassis, which cross member is arranged to extend substantially in the transverse (Y) direction of the vehicle when mounted on the vehicle chassis of a vehicle. A first of two mating mechanical parts, which are arranged to engage to fasten and/or lock a bonnet of the vehicle, is arranged to be mounted in a designated position on the cross member. An area of the cross member in the vicinity of the designated position comprises at least one mechanically weakened deformable portion that is arranged to be more readily deformable than the majority of the remainder of the cross member in the event of a collision with a pedestrian, when the cross member is mounted on the vehicle chassis and subjected to an impact or compression force in the event of a collision with a pedestrian. The deformation of the cross member in the vicinity of the designated position is thereby facilitated and the first mechanical part is consequently arranged to be controllably displaced from its designated position in the event of the collision.

The present invention is based on the insight that a rigid bonnet latch contributes to pedestrian injury during impacts and that the energy-absorbing capacity of the bonnet latch area can be increased by triggering deformation of the cross member in the vicinity of the position in which the first mechanical part of the bonnet latch is mounted. By providing a cross member with at least one mechanically weakened deformable portion, the force exerted by the bonnet latch on a pedestrian in the event of a collision will be reduced, which may reduce the number of injuries suffered by a pedestrian or the severity of the injuries. Furthermore, the deformation of the cross member will result in a smoother impact because of a low force level during initial impact and high energy absorption.

A further advantage of such a cross member is that, while it reduces the risk of injury to a pedestrian in the event of a collision to a substantial extent, it will not limit the design options of a vehicle manufacturer since it does not encroach on limited engine compartment space. Additionally, the cross member gives a vehicle manufacturer maximum freedom to achieve an optimum design with regard to pedestrian protection without requiring additional components and with only a very minor need for additional manufacturing efforts.

Furthermore, the at least one mechanically weakened deformable portion constitutes at least one passive trigger, which if the cross member were subjected to a uniform force, would initiate the controlled deformation of the cross member thereat. Local deformation would namely initially occur in the area of the at least one mechanically weakened deformable portion. The energy absorption of the cross member is therefore limited by the maximum possible deformation in the area of the at least one mechanically weakened deformable portion. However, the first mechanical part may be arranged to be displaced so that it initiates the deformation of a vehicle component other than the cross member, such as a grille or a fender of the vehicle, thereby further absorbing energy in the event of a collision with a pedestrian.

The expression "pedestrian" as used in this document is intended to mean a human being or other living creature, and includes human beings using a vehicle, such as a bicycle or a motorbike, and is not therefore restricted to human beings moving on foot.

The expression "controllably displace" is intended to mean that the cross member comprises at least one mechanically weakened deformable portion that is specifically provided to allow a first mechanical part constituting a bonnet latch to be displaced in a controlled manner.

The expression "an area of the cross member in the vicinity of the designated position" is intended to mean an area immediately adjacent to the designated position or within 10 cm of the outer boundary of the first mechanical member when it is mounted on the cross member. It should be noted that the designated position may be a position on the cross member, or merely an opening in which at least part of the first mechanical member is supported or through which it passes.

The expression "more readily deformable than the majority of the remainder of the cross member" is intended to mean that, irrespective of whether the cross member comprises further openings or one or more relatively weak thin portions such as flanges, the cross member will exhibit more deformation in response to impact or compression forces applied uniformly thereto in the vicinity of the designated position than in the majority of the cross member, whereby a "majority" of the remainder of the cross member is more than 50% of the remainder of the cross member.

According to an embodiment of the invention the at least one mechanically weakened deformable portion comprises at least one area of reduced thickness and/or at least one opening and/or at least one portion comprising a more readily deformable material than the material from which the remainder of the cross member is made. The thickness of the cross member may be reduced by at least 20 %, preferably by at least 50% in the area of the at least one mechanically weakened deformable portion as compared to the remainder of the cross member, or as compared to the thickness of the cross member in the vicinity of the area in which it is attached to the vehicle chassis or some other vehicle component. The opening(s) may be of a uniform or non-uniform shape or have uniform or non-uniform dimensions in the X, Y and/or Z direction of the vehicle.

Generally, a vehicle comprises a chassis structure having a pair of longitudinally extending side rails which are interconnected by a plurality of cross members and/or on which a plurality of cross members are mounted. Cross members are usually attached to the side rails of a vehicle chassis by providing brackets adjacent to openings in the side rails which receive the ends of each cross member and which are welded to the side rails and the ends of the cross members in order to secure the cross members to the side rails.

It should however be noted that the cross member according to the present invention, which may for example be a grille opening reinforcement (GORen) need not necessarily be directly attached to side rails of a vehicle chassis but may be attached to any other component of a vehicle, that is directly or indirectly attached to the vehicle chassis. For example, a cross member according to an embodiment of the invention could extend between two headlamp housings or fenders. Furthermore, the cross member need not necessarily extend across the entire width of the vehicle (as measured in the transverse direction Y of the vehicle).

According to another embodiment of the invention the at least one mechanically weakened deformable portion extends over a distance of up to 200 mm or more, up to 100 mm or up to 50 mm.

According to a further embodiment of the invention the at least one mechanically weakened deformable portion is arranged to allow the first mechanical part to be displaced substantially in the vertical (Z) direction of the vehicle in the event of a collision with a pedestrian, i.e. substantially in the Z-direction only.

According to an embodiment of the invention the at least one mechanically weakened deformable portion is arranged to allow the first mechanical part to be displaced substantially in the longitudinal (X) direction of the vehicle in the event of a collision with a pedestrian, i.e. substantially in the X-direction only.

According to another embodiment of the invention the at least one mechanically weakened deformable portion is arranged to allow the first mechanical part to be displaced substantially in the transverse (Y) direction of the vehicle in the event of a collision with a pedestrian, i.e. substantially in the Y-direction only.

According to a further embodiment of the invention the at least one mechanically weakened deformable portion is arranged to allow the first mechanical part to be displaced substantially in XZ-plane of the vehicle in the event of a collision with a pedestrian.

According to an embodiment of the invention the at least one mechanically weakened deformable portion is arranged to allow the first mechanical part to be displaced substantially in XY-plane of the vehicle in the event of a collision with a pedestrian.

According to another embodiment of the invention the at least one mechanically weakened deformable portion substantially surrounds the first mechanical part.

The present invention also concerns a cross member on which the first mechanical member is mounted or to which it is attached.

The present invention further concerns a vehicle that comprises a cross member according to any of the embodiments of the invention. The present invention is particularly, but not exclusively intended for use in passenger cars, trucks, buses, heavy goods vehicles or any other road-using vehicle or moving object.

### BRIEF DESCRIPTION OF THE DRAWINGS

The present invention will hereinafter be further explained by means of non-limiting examples with reference to the appended schematic figures where;
- Figure 1: shows a side view of a vehicle according to an embodiment of the invention,
- Figure 2: shows an overhead view of parts of vehicle according to an embodiment of the invention,
- Figure 3: shows a front view of a cross member according to an embodiment of the invention, and
- Figure 4: shows a side view of the surface of a cross member according to an embodiment of the invention.

It should be noted that the drawings have not necessarily been drawn to scale and that the dimensions of certain features may have been exaggerated for the sake of clarity.

### DETAILED DESCRIPTION OF EMBODIMENTS

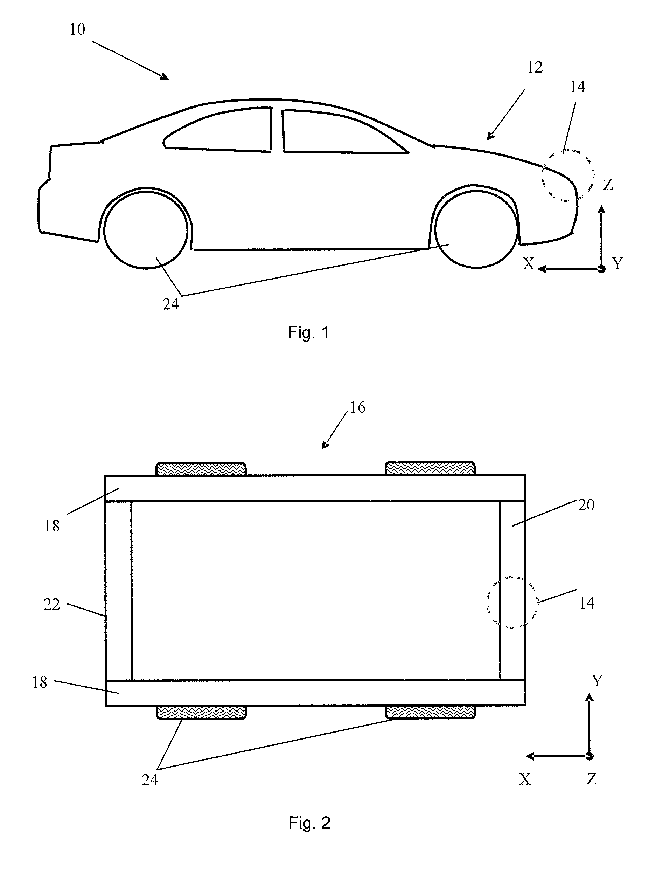

Figure 1 shows a side view of a vehicle 10 according to an embodiment of the invention. The vehicle 10 comprises a bonnet 12, i.e. a component that covers an engine or a compartment at the front of the vehicle and allows access to the engine compartment/compartment for maintenance and repair. The bonnet 12 may be made out of steel, aluminium fiberglass, carbon fibre or any other suitable material and may be hinged at its rear or side or connected to the vehicle in some other way. The vehicle also comprises a concealed bonnet latch, comprising a material having a high tensile strength, such as steel, in the area 14 indicated by a dashed circle. However, a concealed bonnet latch need not necessarily be located in area 14 at front of the vehicle 10 and at transverse centre of the vehicle 10.

The vehicle 10 extends in a transverse direction Y, a longitudinal direction X and a vertical direction Z.

Figure 2 shows a schematic overhead view of a vehicle chassis 16 comprising two longitudinal side rails 18. Two cross members, 20, 22, constituting part of the chassis 16 or part of the vehicle body are mounted on the longitudinal side rails 18 and located at the front and the back of the vehicle respectively. It should be noted that a vehicle 10 may comprise any number of cross members and that the cross member 20 on which a first mechanical part of a bonnet latch is to be mounted need not necessarily be located at the foremost part of the vehicle 10 as shown in figures 1 and 2. Furthermore, the side rails 18 and cross members 20, 22 need not necessarily by straight and located in parallel. The location of the wheels 24 of the illustrated four-wheeled vehicle 10 has been shown in figure 2 for the sake of clarity.

The vehicle 10 includes a bonnet latch that comprises two mating mechanical parts (not shown), a first of which is mounted on the cross member 20 at the front of the vehicle 10 in the area 14 indicated by a dashed circle. The two mechanical members are arranged to engage to fasten and/or lock the bonnet 12 of the vehicle 10, i.e. to temporarily fasten or lock the bonnet 12 to a cross member 20.

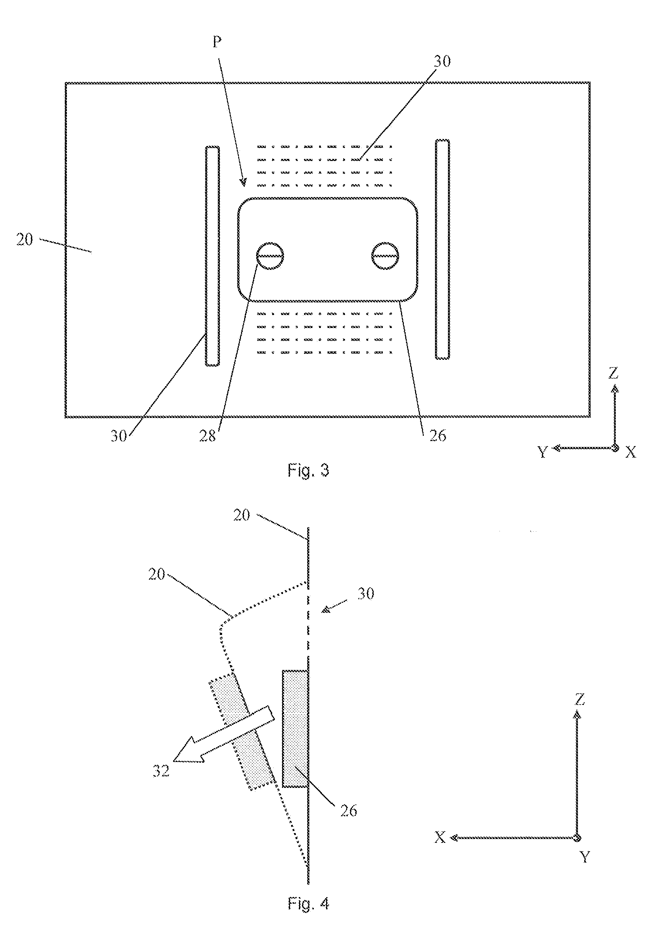

Figure 3 shows a front view of a cross member 20 according to an embodiment of the invention, i.e. the view as would be seen when standing in front of the vehicle and looking at the cross member 20 in the longitudinal direction X of the vehicle 10 when the bonnet 12 is open. The cross member 20 may (in any embodiment of the invention) comprise, or be constituted of metal, such as steel. In the illustrated embodiment the cross member 20 extends substantially in the transverse (Y) direction of the vehicle 10 when mounted on the vehicle chassis 16. In the illustrated embodiment the first mechanical part 26 comprises a plate that is arranged to be mounted vertically on the side of the cross member 20 (i.e. substantially in the YZ-plane of the vehicle 10 by means of screws 28 for example. It should be noted that the expression "substantially in a particular plane", as used throughout this document, is intended to mean up to ±45° from that particular plane. Any means of permanently or non-permanently attaching a first mechanical part 26 to a cross member 18 may of course be used in any of the embodiments of the invention.

The first mechanical part 26 comprises female means (not shown), such as a cavity, for receiving and retaining a corresponding second male mechanical part, such as a hook or pin (not shown) that is mounted on the bonnet 12 of the vehicle 10. It should be noted that the first mechanical part 26 mounted on the cross member 20 could alternatively comprise male means for insertion into a corresponding second female mechanical part mounted on the bonnet 12.

The first mechanical part 26 is arranged to be mounted in a designated position P on the cross member 20. The designated position P may for example be defined by the position of pre-drilled or pre-formed holes for the screws 28.

The area in the vicinity of the designated position P comprises at least one mechanically weakened deformable portion 30 that is arranged to be more readily deformable than the majority of the remainder of the cross member 20 when the cross member 20 is mounted on the vehicle chassis 16 and subjected to an impact or compression force in the event of a collision with a pedestrian. The deformation of the cross member 20 in the vicinity of the designated position P is thereby facilitated and the first mechanical part 26 is consequently arranged to be controllably displaced from its designated position P in the event of the collision.

In the illustrated embodiment the cross member comprises four mechanically weakened deformable portions 30, which substantially surround the first mechanical part 26. Two of the mechanically weakened deformable portions 30 are constituted by openings with a height of up to 70 mm in the vertical (Z) direction of the vehicle (which openings are located to the left and the right of the first mechanical member 26 in figure 3). The openings may be arranged to serve as an air vent to allow air to directly enter the engine compartment, for example to admit air into the engine's intake ahead of the air cleaner and carburetor, or fuel injection manifold, optionally by means of a pipe arranged behind said air vent.

The other two mechanically weakened deformable portions 30 are constituted by portions of reduced thickness (indicated by dot-dashed lines above and below the first mechanical member 26 in figure 3). The thickness of the cross member 20 is namely reduced by at least 20 %, preferably by at least 50% above and below the first mechanical member 26. It should be noted that the openings need not necessarily extend substantially in one direction as illustrated in figure 3, but they may L-shaped openings for example or even have an extension in the X, Y and Z directions of the vehicle through the volume of the cross member in order to guide the first mechanical member 26 in a predetermined manner in the event of a collision with a pedestrian. In the illustrated embodiment, the openings have a height of 70 mm and a width of 10 mm.

It should be noted that the first mechanical member 26 could alternatively be mounted on the top side of the cross member, by means of a horizontal plate extending substantially in the XY-plane of the vehicle 10 for example.

Figure 4 shows a side view of the outermost surface of a cross member 20 before and after a collision with a pedestrian. When the cross member 20 has been subjected to an impact or compression force in the event of a collision between the vehicle in which it is mounted and a pedestrian, the mechanically weakened deformable portion 30 above the rigid first mechanical part 26 of the bonnet latch which is mounted on the surface of the cross member 20 will deform and displace the first mechanical part 26 from its original position in the direction of the block arrow 32.

Further modifications of the invention within the scope of the claims will be apparent to a skilled person.

## Claims

1. Cross member (20) for a vehicle (10), which cross member (20) is arranged to extend substantially in the transverse (Y) direction of said vehicle (10) when mounted on a vehicle chassis (16) of said vehicle (10), and on which cross member (20) a first (26) of two mating mechanical parts, which are arranged to engage to fasten and/or lock a bonnet (12) of said vehicle (10), is arranged to be mounted in a designated position (P), **characterized in that** an area in the vicinity of said designated position (P) comprises at least one mechanically weakened deformable portion (30) that is arranged to be more readily deformable than the majority of the remainder of said cross member (20) in the event of a collision with a pedestrian, whereby the deformation of said cross member (20) in the vicinity of said designated position (P) is facilitated and whereby said first mechanical part (26) is consequently arranged to be controllably displaced from its designated position (P) in the event of said collision.

2. Cross member (20) according to claim 1, **characterized in that** said at least one mechanically weakened deformable portion (30) comprises at least one area of reduced thickness and/or at least one opening.

3. Cross member (20) according to claim 1 or 2, **characterized in that** the at least one mechanically weakened deformable portion (30) extends over a distance of up to 200 mm, up to 100 mm or up to 50 mm.

4. Cross member (20) according to claim 1 or 2, **characterized in that** said at least one mechanically weakened deformable portion (30) is arranged to allow said first mechanical part (26) to be displaced substantially in the Z-direction of said vehicle (10) in the event of a collision with a pedestrian.

5. Cross member (20) according to claim 1 or 2, **characterized in that** said at least one mechanically weakened deformable portion (30) is arranged to allow said first mechanical part (26) to be displaced substantially in the X-direction of said vehicle (10) in the event of a collision with a pedestrian.

6. Cross member (20) according to claim 1 or 2, **characterized in that** said at least one mechanically weakened deformable portion (30) is arranged to allow said first mechanical part (26) to be displaced substantially in the Y -direction of said vehicle (10) in the event of a collision with a pedestrian.

7. Cross member (20) according to claim 1 or 2, **characterized in that** said at least one mechanically weakened deformable portion (30) is arranged to allow said first mechanical part (26) to be displaced substantially in XZ-plane of said vehicle (10) in the event of a collision with a pedestrian.

8. Cross member (20) according to claim 1 or 2, **characterized in that** said at least one mechanically weakened deformable portion (30) is arranged to allow said first mechanical part to be displaced substantially in XY-plane of said vehicle (10) in the event of a collision with a pedestrian.

9. Cross member (20) according to any of the preceding claims, **characterized in that** said at least one mechanically weakened deformable portion (30) substantially surrounds said first mechanical part (26).

10. Vehicle (10), **characterized in that** it comprises a cross member (20) according to any of claims 1-9.
